# EUROPEAN PATENT SPECIFICATION

(11) **EP 4 032 142 B1**
(45) Date of publication and mention of the grant of the patent: **06.11.2024**
(21) Application number: 19945974.4
(22) Date of filing: 16.09.2019
(51) Int. Cl.: H01P 1/205, H01P 11/00

(54) **RADIO FREQUENCY FILTERS HAVING REDUCED SIZE**
FUNKFREQUENZFILTER MIT REDUZIERTER GRÖSSE
FILTRES RADIOFRÉQUENCE DE TAILLE RÉDUITE

(43) Date of publication of application: 27.07.2022
(73) Proprietor: Outdoor Wireless Networks LLC, North Carolina 28610 (US)
(72) Inventor: CENDAMO, Matteo, 20095 Cusano Milanino (IT); RIVA, Marco, 23876 Monticello Brianza (LC) (IT); ZHANG, Dong, Baoji, Shaanxi 722406 (CN)
(74) Representative: Meissner Bolte Partnerschaft mbB
(86) International application number: PCT/CN2019/105929
(87) International publication number: WO 2021/051229

(56) References cited:
- WO-A1-2016/076554
- CN-A- 109 365 422
- CN-U- 209 056 582
- CN-U- 209 056 582
- CN-U- 209 056 582
- KR-A- 20110 018 793
- US-A- 5 329 687
- US-A1- 2015 280 300
- US-A1- 2017 141 446
- US-A1- 2017 141 446
- US-A1- 2018 366 802
- US-A1- 2018 366 802

## Description

### FIELD

The present disclosure relates to communication systems and, in particular, to radio frequency ("RF") filters.

### BACKGROUND

One type of filter for RF applications is a resonator filter comprising a group of coaxial resonators. The overall transfer function of the resonator filter is a function of the responses of the individual resonators as well as the electromagnetic coupling between different pairs of resonators within the group.

U.S. Patent No. 5,812,036 ("the '036 patent") discloses different resonator filters having different configurations and topologies of resonators. For example, the '036 patent discusses a six-stage resonator filter having a 2-by-3 array of cavities between an input terminal and an output terminal, where each cavity has a respective resonator therein. The resonator filter also includes a conductive housing, which defines a portion of the outer conductors of each of the resonators. The remainder of each resonator outer conductor is formed by interior common walls. The resonators may comprise, for example, either air-filled cavity resonators or dielectric-loaded coaxial resonators.

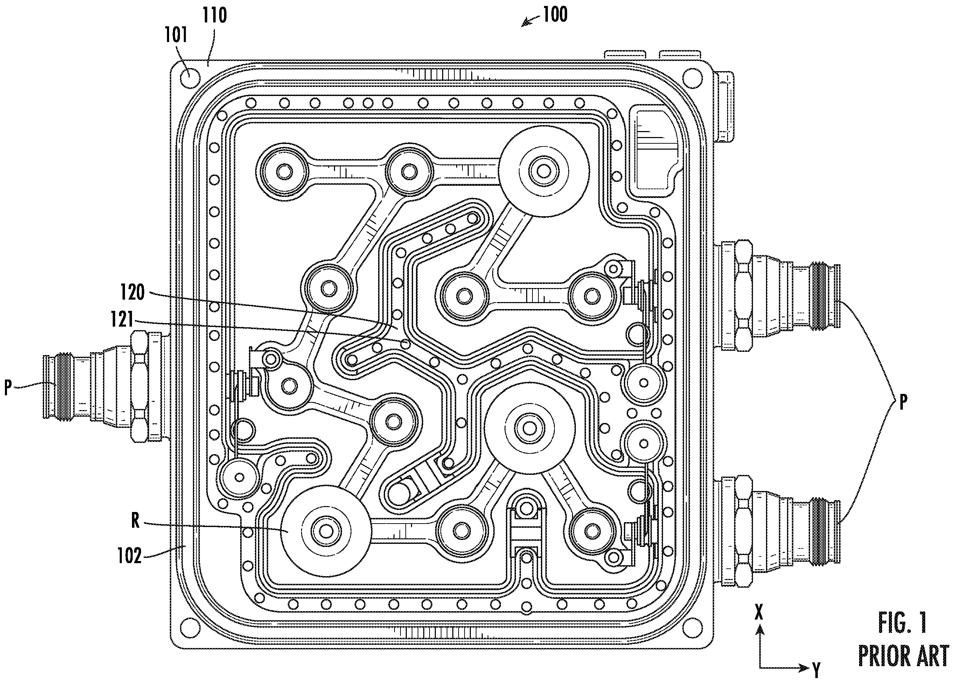

FIG. 1 of the present application shows a prior art RF filter 100 having resonators R that are inside a housing 110 and connector ports P that are on the outside of the housing 110. For example, the filter 100 may include fourteen resonators R between the ports P. To simplify the illustration, however, only three resonators R are shown.

An interior wall 120 extends inside the housing 110 between groups of resonators R. An upper surface of the interior wall 120 includes holes 121 for screws for attaching a tuning cover to the interior of the filter 100, and an upper surface of a perimeter defined by outer walls of the housing 110 includes holes 101 for screws for attaching an outer cover. The upper surface of the perimeter also includes a channel 102 for a gasket, such as an O-ring, that loops around the housing 110.

The filter 100, however, may be undesirably bulky and heavy. As an example, the filter 100 may have a length of 210 millimeters (mm) in a direction Y, a width of 155 mm in a direction X, and a height of 63.5 mm in a direction that is perpendicular to the directions X and Y.

Moreover, the filter 100 may have a volume of 2 liters and a weight of 2.6 kilograms (kg).

Patent document CN 209 056 582 U discloses a coaxial cavity filter with a tuning cover and a housing outer cover.

Patent document US 5 329 687 A discloses the use of conductive adhesives to bond together the housing and the cover of a resonator cavity filter.

Patent document CN 109 365 422 A discloses cleaning holes in the cover of a resonator cavity filter for removing debris from the filter interior.

### SUMMARY

A filter device, according to the embodiments of the invention, includes a housing. The filter device includes a plurality of resonators inside the housing. The filter device includes a wall inside the housing between a first of the resonators and a second of the resonators, and an average thickness of the wall is 3.0 mm or thinner. The filter device includes an outer cover on the housing. The filter device includes adhesive tape that attaches the outer cover to the housing. The filter device includes a tuning cover between the resonators and the outer cover. Moreover, the filter device includes a plurality of cleaning holes in the tuning cover.

In some embodiments, a lower surface of the outer cover may be attached to a flat upper surface of the housing by the adhesive tape. The outer cover and the flat upper surface of the housing may each free of any screw therein. Moreover, the adhesive tape may extend in a continuous loop on the flat upper surface of the housing.

According to some embodiments, the tuning cover may include a plurality of blind holes therein. A plurality of press-in standoffs may be in the blind holes, respectively. Moreover, the filter device may include a gas-discharge circuit. A first of the press-in standoffs may extend through a printed circuit board ("PCB") that includes the gas-discharge circuit.

In some embodiments, the filter device may include a plurality of non-debris tuning elements in the tuning cover. Moreover, the outer cover may be a flat metal sheet.

According to some embodiments, the average thickness of the wall may be 1.5 mm or thinner. The filter device may have fewer than fourteen of the resonators. The first and the second of the resonators may be configured to operate in a receive frequency band and a transmit frequency band, respectively. Moreover, a third of the resonators may be a broadband resonator that is configured to operate in both the receive frequency band and the transmit frequency band.

A filter device, according to some embodiments herein, may include resonators and a cover that is attached by double-sided adhesive tape to a housing that includes the resonators. In some embodiments, the double-sided adhesive tape may extend continuously around a perimeter of the housing.

According to some embodiments, the housing may include four exterior walls that collectively surround the resonators. The four exterior walls may have respective flat upper surfaces that are each free of any opening therein. The double-sided adhesive tape may be on the respective flat upper surfaces of the four exterior walls and on an opposite, lower surface of the cover. Moreover, the filter device may include an interior wall that is inside the housing and is between a first of the resonators and a second of the resonators.

In some embodiments, a thickness of the cover may be 1 mm or thinner. Moreover, the cover may be an outer cover of the filter device, and the filter device may include a tuning cover between the resonators and the outer cover. The filter device may include a cleaning hole and/or a non-debris tuning element in the tuning cover.

A filter device, according to some embodiments herein, may include resonators and a tuning cover that overlaps the resonators and has cleaning holes therein. In some embodiments, the filter device may include a housing including the resonators and the tuning cover therein. The filter device may include an outer cover that is attached to the housing by double-sided adhesive tape. Moreover, the filter device may include a non-debris tuning element in a hole in the tuning cover, and each of the cleaning holes may have a diameter that is narrower than a diameter of the hole that the non-debris tuning element is in.

A filter device, according to some embodiments herein, may include a housing and a plurality of resonators inside the housing. Moreover, the filter device may include a wall inside the housing between a first of the resonators and a second of the resonators. An average thickness of the wall may be 3.0 mm or thinner.

In some embodiments, the average thickness of the wall may be 1.0-2.0 mm, 1.3-1.7 mm, or 1.4-1.6 mm. Moreover, the wall may be an interior wall, the housing may include four exterior walls that collectively surround the resonators and the interior wall, and the four exterior walls may have respective flat upper surfaces that are each free of any opening therein.

A method of manufacturing an RF filter device may include pressing a plurality of press-in standoffs into a plurality of blind holes, respectively, that are in an upper surface of a tuning cover. The method may include soldering a lower surface of the tuning cover that is opposite the upper surface to an interior of the RF filter device. The method may include cleaning, via a plurality of cleaning holes that extend through the tuning cover, the interior of the RF filter device after performing the soldering. Moreover, the method may include attaching, by adhesive tape, a lower surface of an outer cover to an upper surface of a housing of the RF filter device after performing the cleaning.

### BRIEF DESCRIPTION OF THE DRAWINGS

FIG. 1 is a top view of the inside of an RF filter according to the prior art.
FIG. 2A is an exploded top perspective view of an RF filter according to embodiments of the present inventive concepts.
FIG. 2B is an enlarged exploded top perspective view of a portion of the filter of FIG. 2A.
FIG. 2C is a top view of the inside of the filter of FIG. 2A.
FIG. 2D is an enlarged top view of an interior wall of FIG. 2C.
FIG. 2E is a top view of the inside of the filter of FIG. 2A.
FIG. 2F is an enlarged top view of a portion of a tuning cover of FIG. 2E.
FIG. 2G is an exploded top perspective view of a PCB that is attached to the tuning cover of FIG. 2E.
FIG. 2H is a side perspective view of a press-in standoff of FIG. 2G.
FIG. 2I is a top perspective view of the tuning cover of FIG. 2E with tuning elements omitted from view.
FIG. 2J is a top perspective view of the tuning cover of FIG. 2E with tuning elements shown.
FIG. 2K is a top perspective view of a housing of FIG. 2A.
FIG. 3 is a flowchart illustrating operations of manufacturing an RF filter device, according to embodiments of the present inventive concepts.

### DETAILED DESCRIPTION

Pursuant to embodiments of the present inventive concepts, RF filter devices, such as diplexers or duplexers that include a plurality of resonators, are provided. Conventional RF filters, such as the filter 100 (FIG. 1), may each have dozens of screws that fasten covers to the filters. In addition to the screws, conventional filters may each include an O-ring, such as a silicon O-ring in a channel 102 (FIG. 1) of an upper surface of a housing 110 (FIG. 1) of the filter 100. To accommodate the screws and the O-ring, conventional filters may have relatively thick interior and exterior walls.

According to embodiments of the present inventive concepts, however, RF filters having reduced size are provided. For example, a filter may, in some embodiments, achieve thinner exterior walls by using (a) adhesive tape instead of (b) screws to attach an outer cover to a housing of the filter. Because screws are not necessary to attach the outer cover, holes 101 (FIG. 1) may be omitted from a perimeter defined by upper surfaces of the exterior walls of the housing 110 of the conventional filter 100, thus allowing the exterior walls to be thinner. Moreover, the tape may extend continuously around the upper surface to seal the filter and thus may replace the O-ring and its corresponding channel 102, thereby further facilitating a thinning of the exterior walls. The thinner exterior walls can reduce both the dimensions and the weight of the filter.

The size of the filter can also be reduced by attaching a tuning cover to the inside of the filter primarily with solder rather than screws. As an example, solder may be used in place of some (or all) of the screws and corresponding holes 121 (FIG. 1) of the interior wall 120 (FIG. 1) of the conventional filter 100. Solder may also be used in place of most of the screws and corresponding holes of perimeter walls that are between the exterior walls and the interior wall 120. The interior and perimeter walls can thus be thinned, which can reduce both the dimensions and the weight of the filter.

Though it may be difficult to remove the tuning cover to clean the filter after the tuning cover is soldered to the inside of the filter, the filter may be cleaned without removing the tuning cover. The tuning cover includes cleaning holes through which excess solder flux or other debris can be removed while the tuning cover is joined to the inside of the filter. Moreover, non-debris tuning elements and press-in standoffs may be used in the tuning cover to reduce/prevent metal debris (e.g., shavings) inside the filter. The cleaning holes, the non-debris tuning elements, and/or the press-in standoffs may help to reduce/prevent the generation of passive intermodulation ("PIM") distortion when the filter is operated.

Example embodiments of the present inventive concepts will be described in greater detail with reference to the attached figures.

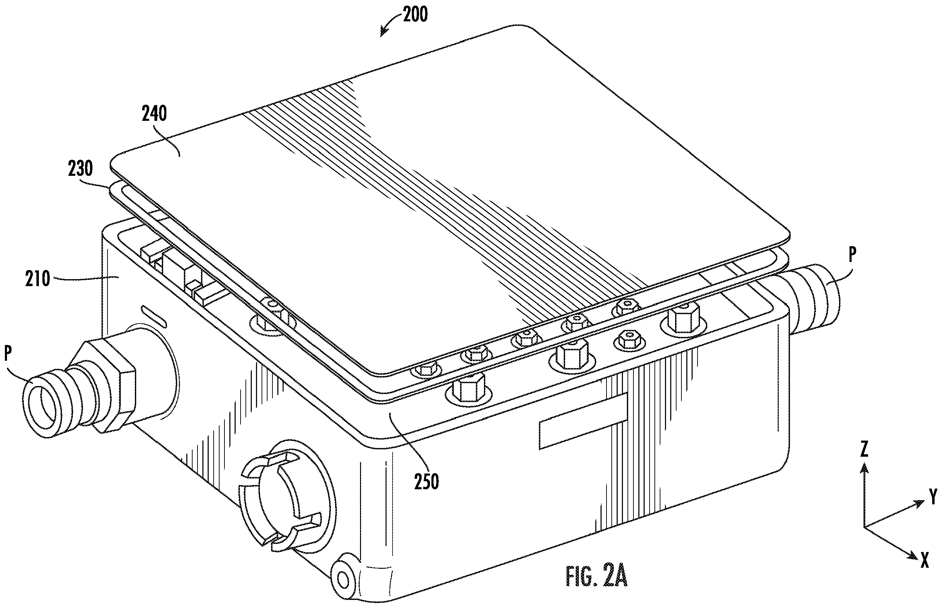

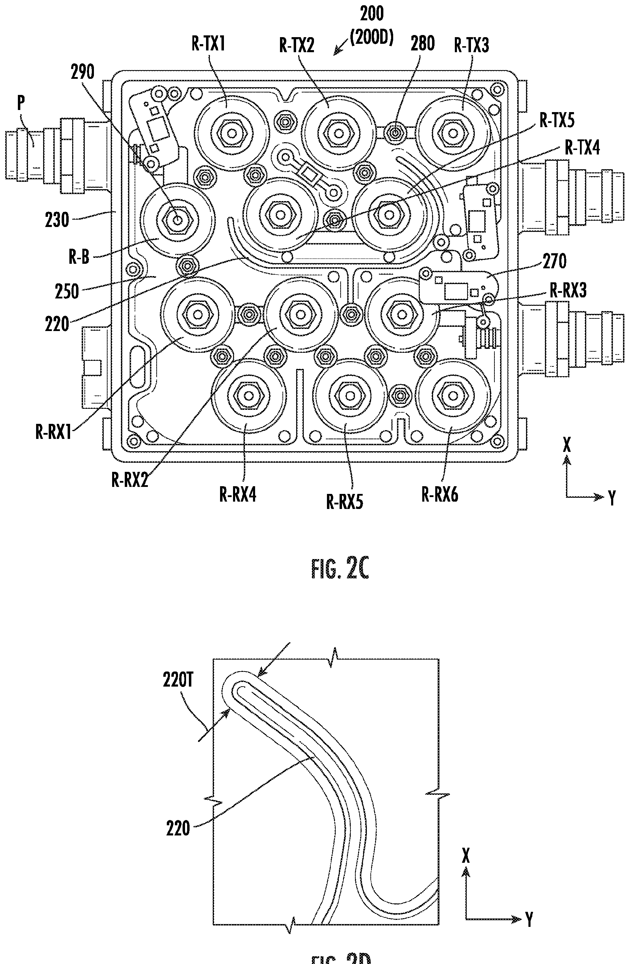

FIG. 2A is an exploded top perspective view of an RF filter 200 according to embodiments of the present inventive concepts. The filter 200 is a device that includes resonators R (FIG. 2C) between ports P. The resonators R are inside a housing 210, and may be covered by an outer cover 240 and by a tuning cover 250 that is between the resonators R and the outer cover 240. The outer cover 240, which may be a top exterior (i.e., outermost) lid on the filter 200, may be attached to the housing 210 by adhesive tape 230.

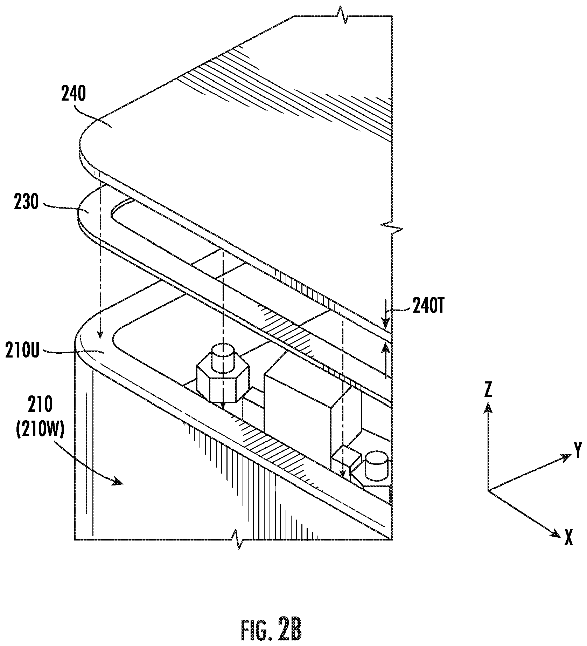

FIG. 2B is an enlarged exploded top perspective view of a portion of the filter 200 (FIG. 2A). As shown in FIG. 2B, the tape 230 may attach an upper surface 210U of the housing 210 to a lower surface of the outer cover 240 that is opposite the upper surface 210U. For example, the tape 230 may be double-sided tape, such as a high-strength, double-sided acrylic foam tape that can bond a variety of materials, including metal surfaces. An example is 3M^{™} VHB^{™} tape. In some embodiments, the tape 230 may be non-conductive. Moreover, an upper surface of the outer cover 240, as well as all side surfaces of the outer cover 240 and all side surfaces of the housing 210, may not be contacted by (i.e., may be free of) the tape 230.

The upper surface 210U may be a flat upper surface of an exterior wall 210W of the housing 210. For example, the housing 210 may have a generally rectangular shape that is provided by four of the exterior walls 210W, which have respective flat upper surfaces 210U that are coplanar (in an X-Y plane) with each other. Moreover, the coplanar flat upper surfaces 210U may be connected to each other to provide a continuous flat upper surface 210U that extends continuously around a perimeter of the housing 210. As an example, the continuous flat upper surface 210U may provide a rectangular border with a thickness in the X-Y plane of 4.0 mm. The tape 230 may likewise extend in a continuous loop (FIG. 2C) on the continuous flat upper surface 210U, thus enhancing adhesion and sealing between the housing 210 and the outer cover 240.

The outer cover 240 and the upper surface 210U may not include (i.e., may each be free of) any screw therein. Accordingly, in contrast with outer covers of conventional RF filters, such as the filter 100 (FIG. 1), the outer cover 240 may be attached to the housing 210 by the tape 230 rather than by screws. Moreover, the outer cover 240 may have flat opposite upper and lower surfaces. For example, the outer cover 240 may be a flat metal sheet. As a result, the upper surface 210U may be thinner in the X-Y plane than it would be if it received screws, and the flat outer cover 240 may have a thickness 240T of only 1.0 mm or thinner in a direction Z, which may be perpendicular to the direction X and the direction Y. For example, the dimensions of the outer cover 240 may be 148.5 mm in length in the direction Y, 143.5 mm in width in the direction X, and 1.0 mm in height/thickness 240T in the direction Z. The flat outer cover 240 may thus be thinner than conventional ribbed outer covers.

In some embodiments, the filter 200 may provide a compact filter for small cell applications, such as small cell base stations, which are discussed in U.S. Patent Application No. 62/722,416. The filter 200 is not limited to small cell applications, however, and may, in some embodiments, be used for macro cell applications, such as macro cell base stations.

FIG. 2C is a top view of the inside of the filter 200. As shown in FIG. 2C, the filter 200 may include a first group of resonators R-TX1 through R-TX5 and a second group of resonators R-RX1 through R-RX6. An interior wall 220 may extend inside the housing 210 (FIG. 2A) between the first and second resonator groups, thus defining different cavities inside the housing 210 for the two groups, which may be configured to operate in different respective frequency bands.

For example, the resonators R-TX1 through R-TX5 may be configured to operate in a transmit frequency band, such as 880-960 megahertz ("MHz") or a portion thereof, and the resonators R-RX1 through R-RX6 may be configured to operate in a receive frequency band, such as 694-862 MHz or a portion thereof. As an example, the filter 200 may be a diplexer or duplexer 200D in which the resonators R-TX1 through R-TX5 provide a transmit-only filter and the resonators R-RX1 through R-RX6 provide a receive-only filter. Moreover, the filter 200 may, in some embodiments, include a broadband resonator R-B that is configured to operate in both the receive frequency band and the transmit frequency band. Collectively, the resonators R-B, R-TX1 through R-TX5, and R-RX1 through R-RX6 may be referred to herein as resonators R.

The resonators R may have circular conductive upper surfaces in the X-Y plane. As an example, the resonators R may be steel and may be electrically connected to one or more ports P via conductive lines, such as copper strip lines.

The resonators R-B and R-TX1 through R-TX5 may provide two transmission zeros in the receive frequency band. Moreover, the resonators R-B and R-RX1 through R-RX6 may provide three transmission zeros in the transmit frequency band.

In both the receive frequency band and the transmit frequency band, the filter 200 may typically have an insertion loss of 0.3 decibels ("dB") and a maximum insertion loss of 0.5 dB. The filter 200 may typically have a return loss in the receive frequency band and the transmit frequency band of 23 dB and a minimum return loss of 20 dB. Moreover, the filter 200 may typically have rejection of 53 dB and a minimum rejection of 50 dB, in both the receive frequency band and the transmit frequency band.

In the receive frequency band, the filter 200 may typically have a group delay of 20 nanoseconds ("ns") and a maximum group delay of 40 ns. In the transmit frequency band, the filter 200 may typically have a group delay of 30 ns and a maximum group delay of 45 ns.

FIG. 2C also illustrates that the tape 230 may extend in a continuous loop on the housing 210, which may define a rectangular perimeter that surrounds the resonators R. For example, four exterior walls 210W (FIG. 2B) of the housing 210 may collectively surround the resonators R, and the tape 230 may be on respective flat upper surfaces 210U (FIG. 2B) of the four exterior walls 210W. The flat upper surfaces 210U may each be free of any opening therein, as they include neither the holes 101 (FIG. 1) nor the channel 102 (FIG. 1) of the conventional housing 110 (FIG. 1). As a result, the housing 210 may be thinner, and thus more lightweight, than the conventional housing 110.

In some embodiments, the housing 210 may be a metal housing. For example, a single machined or die-cast piece may, in some embodiments, comprise the exterior walls 210W and/or a bottom surface of the housing 210. Accordingly, the flat upper surfaces 210U may be metal surfaces. Moreover, the ports P may be on the exterior walls 210W. As an example, the ports P may include two ports that protrude outward from a first of the exterior walls 210W in the direction Y and one port that protrudes outward from an opposite second of the exterior walls 210W. The two ports on the first of the exterior walls 210W may be electrically connected to the first group of resonators R-TX1 through R-TX5 and the second group of resonators R-RX1 through R-RX6, respectively.

Though five resonators R are shown in the first group and six resonators R are shown in the second group, more (i.e., six, seven, or more) or fewer (e.g., three, four, or five) resonators R may be included in either group. In some embodiments, the weight and dimensions of the filter 200 may be advantageously reduced relative to the conventional filter 100 (FIG. 1) by having fewer than fourteen total resonators R. For example, by having a total of twelve resonators R in the filter 200 rather than fourteen, the weight and volume of the filter 200 may each be reduced by at least five percent.

As an example, by having (a) twelve resonators R, (b) the thin interior wall 220, and (c) the thin exterior wall 210W, the filter 200 may have a length of 149.5 mm in the direction Y, a width of 144.5 mm in the direction X, and a height of 55.3 mm in the direction Z. The filter 200 may also have a volume of 1.19 liters and a weight of 1.48 kg. Accordingly, the weight and volume of the filter 200 may each be reduced by at least forty percent relative to the conventional filter 100.

In some embodiments, one of the twelve resonators R may be a broadband resonator R-B. Moreover, to achieve small dimensions, the twelve resonators R may be arranged along the direction Y in four rows that each have three resonators R. By contrast, if one of the rows instead has four resonators R, then the length and/or the width of the filter 200 may increase. For example, the filter 200 may have a length of 165 mm, a width of 149 mm, a height of 55.3 mm, a volume of 1.3 liters, and a weight of 1.6 kg if one of the rows has four resonators R arranged along the direction Y. Moreover, if fourteen resonators R are used instead of twelve, then the filter 200 may have a length of 181 mm, a width of 144.5 mm, a height of 55.3 mm, a volume of 1.4 liters, and a weight of 1.9 kg.

The filter 200 may include tuning elements 280/290. For example, tuning elements 280 may be between a pair of adjacent resonators R, and tuning elements 290 may be in the resonators R. As an example, the tuning elements 290 may be in center portions (e.g., openings) of respective resonators R. The tuning elements 280/290 may be metal tuning elements or dielectric tuning elements, such as metal tuning screws or dielectric tuning screws. Both a dielectric tuning element and a metal tuning element can change capacitive coupling(s) (a) between resonators R and/or (b) between resonators R and the housing 210.

Example tuning elements are discussed in U.S. Patent Application No. 62/696,959 ("the '959 application'). In some embodiments, the tuning elements 280/290 may be tuning elements that prevent/reduce metal debris formation, such as the tuning elements discussed in the '959 application, and thus may be referred to herein as "non-debris" tuning elements. For example, a contact portion of each of the tuning elements 280/290 may be free of threading. In some embodiments, a diameter in the X-Y plane of a top surface of each tuning element 280 may be narrower than a diameter in the X-Y plane of a top surface of each tuning element 290.

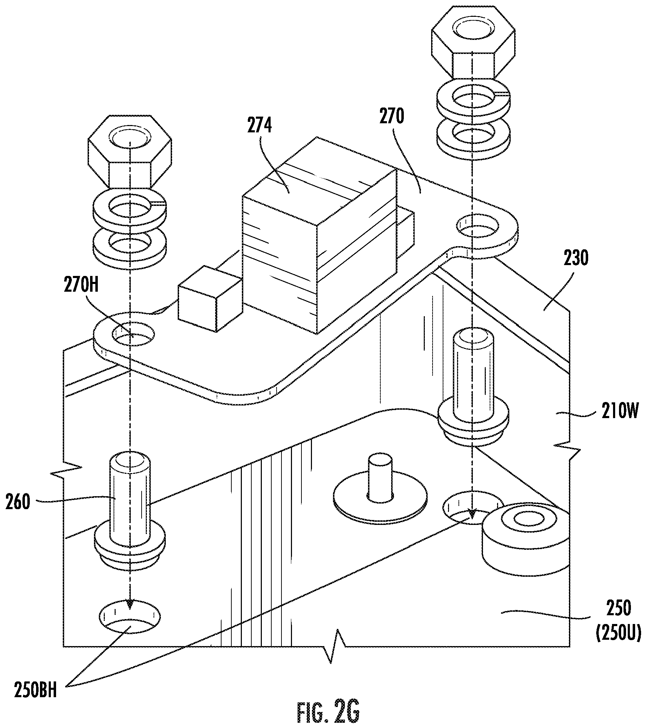

One or more PCBs 270 may be inside the filter 200 at a level in the direction Z that is above the resonators R. For example, the PCB(s) 270 may be attached to an upper surface 250U (FIG. 2G) of the tuning cover 250. Though the tuning cover 250 is typically a metal (e.g., aluminum) lid that intervenes between the resonators R and the PCB(s) 270, the tuning cover 250 is depicted transparently in FIG. 2C for ease of illustrating the underlying resonators R and interior wall 220.

FIG. 2D is an enlarged top view of the interior wall 220 (FIG. 2C). As shown in FIG. 2D, the interior wall 220 may have an average thickness 220T in the X-Y plane. The average thickness 220T may be 3.0 mm or thinner. For example, the average thickness 220T may be 1.0-2.0 mm, 1.3-1.7 mm, 1.4-1.6 mm, or 1.5 mm or thinner. In particular, the average thickness 220T may be thinner than a corresponding average thickness of the interior wall 120 (FIG. 1) of the conventional filter 100 (FIG. 1) because an upper surface of the interior wall 220 has fewer (or none) of the holes 121 (FIG. 1) for screws, which may be in portions of the interior wall 120 that are at least 5.0 mm thick in the X-Y plane. For example, with the exception of a few locations where multiple branches of the interior wall 220 converge, the interior wall 220 may be free of any opening in an upper surface thereof. The reduced thickness of the interior wall 220 may advantageously facilitate smaller dimensions and a lighter weight of the filter 200.

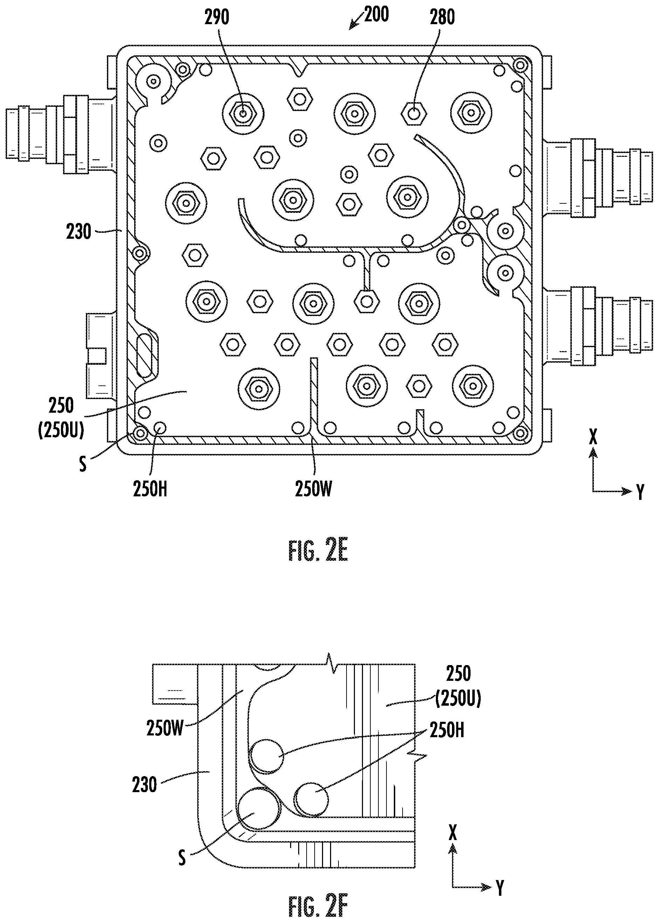

FIG. 2E is a top view of the inside of the filter 200 (FIG. 2A). The tuning cover 250 overlaps the resonators R (FIG. 2C) and includes tuning elements 280/290 that affect capacitive coupling(s) between the resonators R. In some embodiments, the tuning cover 250 may include cleaning holes 250H that facilitate cleaning of the filter 200 without needing to remove the tuning cover 250 from the housing 210. For example, an ultrasonic machine may be used to inject and extract a cleaning liquid via the cleaning holes 250H to clean (e.g., to remove debris from) the filter 200. By contrast, a conventional tuning cover must be removed to clean debris that may result from tuning (e.g., from rotating a tuning screw in the tuning cover) of the conventional filter 100 (FIG. 1). Because the tuning elements 280/290 may be non-debris tuning elements, however, the cleaning holes 250H may, in some embodiments, be omitted.

In some embodiments, the tuning cover 250 may include both (i) cleaning holes 250H and (ii) non-debris tuning elements 280/290. As an example, the cleaning holes 250H may advantageously facilitate cleaning of the filter 200 upon detecting a PIM failure, which may not necessarily be caused by the tuning elements 280/290. Moreover, excess solder flux, which may result from joining the tuning cover 250 to the interior of the housing 210, may be removed via the cleaning holes 250H.

Rather than using a large number (e.g., dozens) of screws to attach the tuning cover 250 inside the housing 210 (FIG. 2A), the tuning cover 250 may be joined to the interior of the filter 200 by heating various welding areas 250W of the tuning cover 250. For example, the welding areas 250W may include a perimeter of the tuning cover 250 and a portion of the tuning cover 250 that overlaps the interior wall 220 (FIG. 2C). Accordingly, the tuning cover 250 may be welded/soldered to an interior perimeter of the filter 200 and to the interior wall 220. Though referred to herein as "welding" areas 250W, the areas 250W may be welded, soldered, or otherwise heated to join the tuning cover 250 to the interior of the housing 210. Examples of soldered connections are discussed in U.S. Patent No. 10,050,323.

In some embodiments, screws S may extend through the tuning cover 250 to inhibit movement of the tuning cover 250 that may otherwise occur during welding/soldering thereof. For example, one or more of the screws S may be in the welding areas 250W, and one or more others of the screws S may be in a middle portion of the tuning cover 250. The tuning cover 250 may, in some embodiments, include a total of ten or fewer screws S. By contrast, the conventional filter 100 (FIG. 1) may typically have 60-70 screws that fasten a tuning cover to the housing 110 (FIG. 1). A top surface of each of the screws S may have a smaller diameter in the X-Y plane than a diameter in the X-Y plane of a top surface of each tuning element 280/290.

FIG. 2F is an enlarged top view of a portion of the tuning cover 250 (FIG. 2E). As shown in FIG. 2F, the cleaning holes 250H may be adjacent a welding area 250W and/or a screw S. For example, corner regions of the tuning cover 250 may each include a pair of cleaning holes 250H, a welding area 250W, and a screw S.

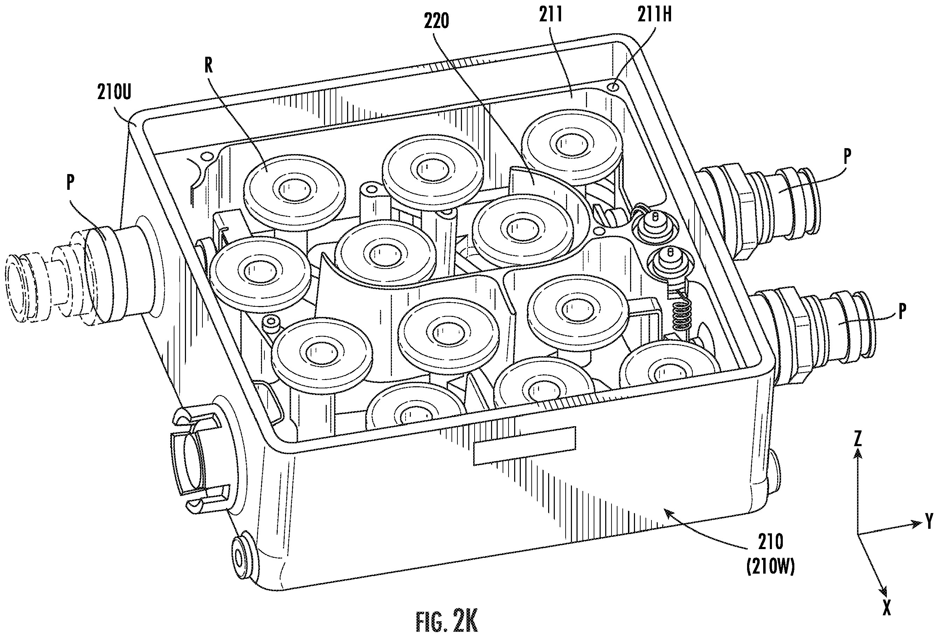

A lower surface of the tuning cover 250 is the surface that is joined to the interior of the filter 200. The depiction of the welding areas 250W in FIGS. 2E and 2F, which show an upper surface 250U of the tuning cover 250 that is opposite the lower surface, thus represents locations on the upper surface 250U that are heated to join corresponding areas of the lower surface to the interior wall 220 (FIG. 2C) and to a perimeter wall 211 (FIG. 2K). For example, a stencil may be used to apply a low-temperature solder paste to upper surfaces of the interior wall 220 and the perimeter wall 211, and/or to the lower surface of the tuning cover 250. The welding areas 250W may then be heated to join the lower surface of the tuning cover 250 to the upper surfaces of the interior wall 220 and the perimeter wall 211 via the solder paste. The solder paste may increase galvanic contact between (a) the tuning cover 250 and (b) the interior wall 220 and the perimeter wall 211.

FIG. 2G is an exploded top perspective view of a PCB 270 that is attached to the tuning cover 250 (FIG. 2E). In particular, FIG. 2G illustrates that each PCB 270 may be attached to the tuning cover 250 by one or more press-in standoffs 260. The standoffs 260 may be pressed by a tool into respective blind holes 250BH that are in the upper surface 250U of the tuning cover 250 and that do not extend completely through the tuning cover 250. By contrast, in the conventional filter 100 (FIG. 1), a PCB may be fastened via conventional downward-facing threaded screws to a conventional tuning cover, thereby generating metal debris inside the filter 100. The standoffs 260 and the blind holes 250BH can thus advantageously prevent/reduce metal debris that may otherwise be generated when penetrating a tuning cover with conventional threaded screws.

In some embodiments, the PCB 270 may comprise a gas-discharge circuit 274 adjacent each port P (FIG. 2C). Moreover, the standoffs 260 may extend through holes 270H in the PCB 270.

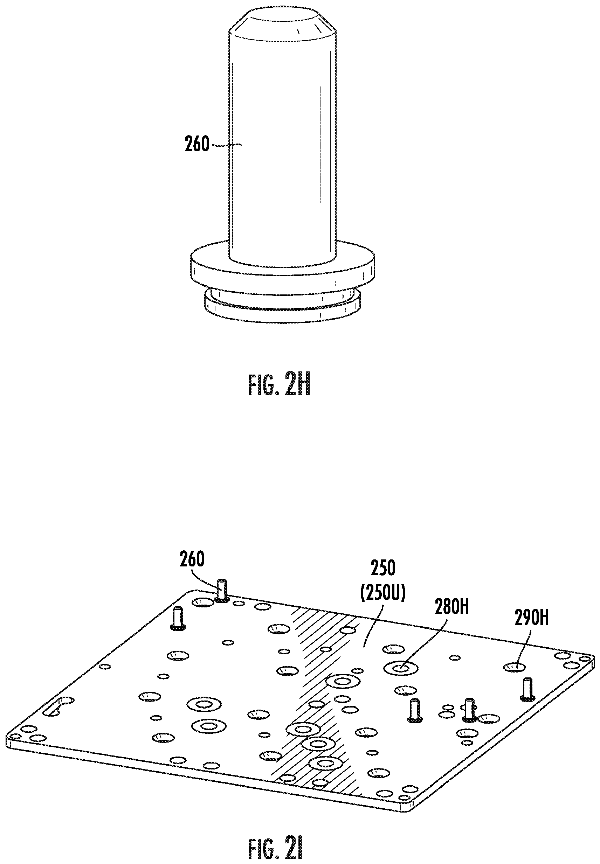

FIG. 2H is a side perspective view of a press-in standoff 260 (FIG. 2G). As shown in FIG. 2H, the standoff 260 may be free of threading and thus may help to prevent/reduce metal debris inside the filter 200. In some embodiments, the standoff 260 may comprise a metal alloy, such as brass.

FIG. 2I is a top perspective view of the tuning cover 250 (FIG. 2E) with tuning elements 280 and 290 (FIG. 2C) omitted from view. FIG. 2I illustrates press-in standoffs 260 that have been pressed into the upper surface 250U of the tuning cover 250. Moreover, FIG. 2I illustrates holes 280H for the tuning elements 280 and holes 290H for the tuning elements 290. Unlike the blind holes 250BH (FIG. 2G) that the standoffs 260 are pressed into, the holes 280H and 290H extend completely through the tuning cover 250.

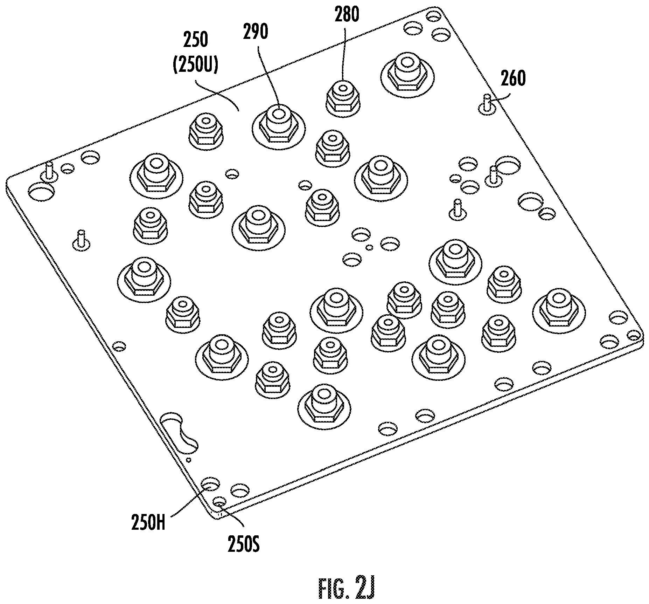

FIG. 2J is a top perspective view of the tuning cover 250 (FIG. 2E) with tuning elements 280 and 290 shown. The tuning elements 280 and 290 may extend completely through the tuning cover 250 via the holes 280H and 290H (FIG. 2I), respectively, to affect capacitive coupling(s) between, for example, resonators R (FIG. 2C). As discussed herein, however, the tuning elements 280 and 290 may be non-debris tuning elements that prevent/reduce metal debris inside the filter 200.

FIG. 2J also shows cleaning holes 250H, as well as holes 250S for screws S (FIG. 2E). The cleaning holes 250H may, in some embodiments, have a wider diameter than the holes 250S and a narrower diameter than the holes 280H and 290H.

FIG. 2K is a top perspective view of the housing 210 (FIG. 2A). As shown in FIG. 2K, a perimeter wall 211 may be inside the housing 210 between the interior wall 220 and the exterior wall 210W. For example, the perimeter wall 211, which is shorter in the direction Z than the exterior wall 210W, may, in some embodiments, be integrated with (e.g., attached to or formed from the same piece of metal as) the exterior wall 210W. The perimeter wall 211 may include holes 211H for screws S (FIG. 2E) that extend completely through the holes 250S (FIG. 2J) and into the holes 211H to fasten the tuning cover 250 (FIG. 2J) to the perimeter wall 211.

Welding areas 250W (FIG. 2E) that are on a perimeter of the tuning cover 250 may be heated to join the lower surface of the tuning cover 250 to the upper surface of the perimeter wall 211, and other welding areas 250W that are in a middle portion of the tuning cover 250W may be heated to join the lower surface of the tuning cover 250 to the upper surface of the interior wall 220. For example, the upper surface of the perimeter wall 211 and the upper surface of the interior wall 220 may be coplanar with each other in the X-Y plane, and thus may provide a shelf/ledge for the tuning cover 250 inside the housing 210. Moreover, the upper surface 250U (FIG. 2G) of the tuning cover 250 may be lower in the direction Z than the upper surface 210U of the exterior wall 210W of the housing 210.

In some embodiments, the perimeter wall 211 may surround the resonators R. For example, the perimeter wall 211 may comprise four walls/sides that provide a rectangular perimeter around the resonators R. Moreover, the interior wall 220 may protrude from the perimeter wall 211 toward a middle portion inside the housing 210.

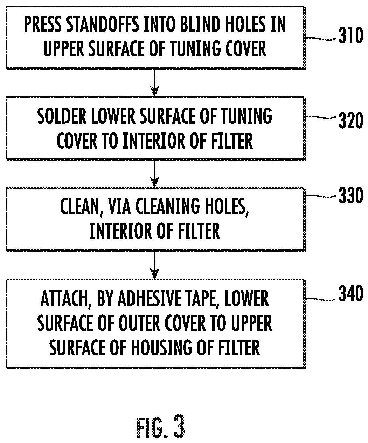

FIG. 3 is a flowchart illustrating operations of manufacturing an RF filter device 200 (FIG. 2A). The operations may include pressing (Block 310) a plurality of press-in standoffs 260 (FIG. 2G) into a plurality of blind holes 250BH (FIG. 2G), respectively, that are in an upper surface 250U (FIG. 2G) of a tuning cover 250 (FIG. 2I). The operations may include soldering (Block 320), or otherwise using heat to join, a lower surface of the tuning cover 250 that is opposite the upper surface 250U to an interior of the filter 200. The operations may include cleaning (Block 330), via a plurality of cleaning holes 250H (FIG. 2F) that extend through the tuning cover 250, the interior of the filter 200 after performing the soldering. Moreover, the operations may include attaching (Block 340), by adhesive tape 230 (FIG. 2B), a lower surface of an outer cover 240 (FIG. 2B) to an upper surface 210U (FIG. 2B) of a housing 210 (FIG. 2B) of the filter 200 after performing the cleaning. In some embodiments, the operations may include adjusting tuning elements 280/290 (FIG. 2E) in the tuning cover 250 and/or performing a PIM test of the filter 200.

An RF filter device 200 (FIG. 2A) according to embodiments of the present inventive concepts may provide a number of advantages. These advantages, relative to the conventional filter 100 (FIG. 1), include reduced size (e.g., dimensions and weight) due to (a) attaching the outer cover 240 (FIG. 2B) to the upper surface 210U (FIG. 2B) of the housing 210 (FIG. 2B) via tape 230 (FIG. 2B) instead of screws, (b) soldering the tuning cover 250 (FIG. 2A) to the interior wall 220 (FIG. 2K) and/or to the perimeter wall 211 (FIG. 2K), (c) using an outer cover 240 that is flat rather than ribbed, and/or (d) having twelve or fewer resonators R (FIG. 2K) inside the filter 200. Moreover, the present inventive concepts can reduce/prevent PIM by (i) including the cleaning holes 250H (FIG. 2F), (ii) the non-debris tuning elements 280/290 (FIG. 2E), and/or (iii) the press-in standoffs 260 (FIG. 2G) and blind holes 250BH (FIG. 2G) in the tuning cover 250.

The present inventive concepts have been described above with reference to the accompanying drawings. The present inventive concepts are not limited to the illustrated embodiments. Rather, these embodiments are intended to fully and completely disclose the present inventive concepts to those skilled in this art. In the drawings, like numbers refer to like elements throughout. Thicknesses and dimensions of some components may be exaggerated for clarity.

Spatially relative terms, such as "under," "below," "lower," "over," "upper," "top," "bottom," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "under" or "beneath" other elements or features would then be oriented "over" the other elements or features. Thus, the example term "under" can encompass both an orientation of over and under. The device may be otherwise oriented (rotated 90 degrees or at other orientations) and the spatially relative descriptors used herein interpreted accordingly.

Herein, the terms "attached," "connected," "interconnected," "contacting," "mounted," and the like can mean either direct or indirect attachment or contact between elements, unless stated otherwise.

Well-known functions or constructions may not be described in detail for brevity and/or clarity. As used herein the expression "and/or" includes any and all combinations of one or more of the associated listed items.

The terminology used herein is for the purpose of describing particular embodiments only and is not intended to be limiting of the present inventive concepts. As used herein, the singular forms "a," "an," and "the" are intended to include the plural forms as well, unless the context clearly indicates otherwise. It will be further understood that the terms "comprises," "comprising," "includes," and/or "including" when used in this specification, specify the presence of stated features, operations, elements, and/or components, but do not preclude the presence or addition of one or more other features, operations, elements, components, and/or groups thereof.

## Claims

1. A filter device (200) comprising:
a housing (210);
a plurality of resonators (R) inside the housing;
a wall (220) inside the housing between a first of the resonators and a second of the resonators, wherein an average thickness of the wall is 3.0 mm or thinner;
an outer cover (240) on the housing;
adhesive tape (230) that attaches the outer cover to the housing;
a tuning cover (250) between the resonators and the outer cover; and
a plurality of cleaning holes (250H) in the tuning cover.

2. The filter device of Claim 1, wherein a lower surface of the outer cover is attached to a flat upper surface (210U) of the housing by the adhesive tape,

3. The filter device of Claim 2, wherein the outer cover and the flat upper surface of the housing are each free of any screw therein.

4. The filter device of Claim 2, wherein the adhesive tape extends in a continuous loop on the flat upper surface of the housing.

5. The filter device of Claim 1,
wherein the tuning cover comprises a plurality of blind holes (250BH) therein, and
wherein a plurality of press-in standoffs (260) are in the blind holes, respectively,

6. The filter device of Claim 5, further comprising a gas-discharge circuit (274), wherein a first of the press-in standoffs extends through a printed circuit board (270), PCB, that comprises the gas-discharge circuit.

7. The filter device of Claim 1, further comprising a plurality of non-debris tuning elements (280, 290) in the tuning cover.

8. The filter device of Claim 1, wherein the outer cover is a flat metal sheet.

9. The filter device of Claim 1,
wherein the average thickness of the wall is 1.5 mm or thinner,
wherein the filter device has fewer than fourteen of the resonators,
wherein the first and the second of the resonators are configured to operate in a receive frequency band and a transmit frequency band, respectively, and
wherein a third of the resonators is a broadband resonator (R-B) that is configured to operate in both the receive frequency band and the transmit frequency band.

10. A method of manufacturing a radio frequency, RF, filter device, the method comprising:
pressing a plurality of press-in standoffs into a plurality of blind holes, respectively, that are in an upper surface of a tuning cover (310);
soldering a lower surface of the tuning cover that is opposite the upper surface to an interior of the RF filter device (320);
cleaning, via a plurality of cleaning holes that extend through the tuning cover, the interior of the RF filter device after performing the soldering (330); J and
attaching, by adhesive tape, a lower surface of an outer cover to an upper surface of a housing of the RF filter device after performing the cleaning (340).

## Patentansprüche

1. Filtervorrichtung (200), umfassend:
ein Gehäuse (210);
eine Vielzahl von Resonatoren (R) innerhalb des Gehäuses;
eine Wand (220) innerhalb des Gehäuses zwischen einem ersten der Resonatoren und einem zweiten der Resonatoren, wobei eine durchschnittliche Dicke der Wand 3,0 mm oder dünner ist;
eine äußere Abdeckung (240) an dem Gehäuse;
Klebeband (230), das die äußere Abdeckung an dem Gehäuse befestigt;
eine Abstimmabdeckung (250) zwischen den Resonatoren und der äußeren Abdeckung; und
eine Vielzahl von Reinigungslöchern (250H) in der Abstimmabdeckung.

2. Filtervorrichtung nach Anspruch 1, wobei eine untere Fläche der äußeren Abdeckung an einer flachen oberen Fläche (210U) des Gehäuses durch das Klebeband befestigt ist.

3. Filtervorrichtung nach Anspruch 2, wobei die äußere Abdeckung und die flache obere Fläche des Gehäuses jeweils frei von einer Schraube darin sind.

4. Filtervorrichtung nach Anspruch 2, wobei sich das Klebeband in einer kontinuierlichen Schleife auf der flachen oberen Fläche des Gehäuses erstreckt.

5. Filtervorrichtung nach Anspruch 1,
wobei die Abstimmabdeckung eine Vielzahl von Blindlöchern (250BH) darin aufweist, und
wobei sich in den Blindlöchern jeweils eine Vielzahl von Einpressabstandshaltern (260) befindet.

6. Filtervorrichtung nach Anspruch 5, ferner umfassend eine Gasentladungsschaltung (274),
wobei sich ein erster der Einpressabstandshalter durch eine Leiterplatte (270), PCB, erstreckt, die die Gasentladungsschaltung umfasst.

7. Filtervorrichtung nach Anspruch 1, ferner umfassend eine Vielzahl von schmutzfreien Abstimmelementen (280, 290) in der Abstimmabdeckung.

8. Filtervorrichtung nach Anspruch 1, wobei die äußere Abdeckung ein flaches Metallblech ist.

9. Filtervorrichtung nach Anspruch 1,
wobei die durchschnittliche Dicke der Wand 1,5 mm oder dünner ist,
wobei die Filtervorrichtung weniger als vierzehn der Resonatoren aufweist,
wobei der erste und der zweite der Resonatoren konfiguriert sind, in einem Empfangsfrequenzband bzw. einem Sendefrequenzband zu arbeiten, und
wobei ein dritter der Resonatoren ein Breitbandresonator (R-B) ist, der konfiguriert ist, sowohl in dem Empfangsfrequenzband als auch in dem Sendefrequenzband zu arbeiten.

10. Verfahren zur Herstellung einer Hochfrequenz(HF)-Filtervorrichtung, das Verfahren umfassend:
Pressen einer Vielzahl von Einpressabstandshaltern in eine entsprechende Vielzahl von Blindlöchern, die sich in einer oberen Fläche einer Abstimmabdeckung (310) befinden;
Löten einer unteren Fläche der Abstimmabdeckung, die der oberen Fläche gegenüberliegt, an ein Inneres der HF-Filtervorrichtung (320);
Reinigen des Inneren der HF-Filtervorrichtung nach dem Löten (330) über eine Vielzahl von Reinigungslöchern, die sich durch die Abstimmabdeckung erstrecken; und
Befestigen einer unteren Fläche einer äußeren Abdeckung an einer oberen Fläche eines Gehäuses der HF-Filtervorrichtung durch Klebeband nach Durchführen der Reinigung (340).

## Revendications

1. Dispositif de filtre (200) comprenant :
un boîtier (210) ;
une pluralité de résonateurs (R) à l'intérieur du boîtier ;
une paroi (220) à l'intérieur du boîtier entre un premier des résonateurs et un deuxième des résonateurs, dans lequel une épaisseur moyenne de la paroi est de 3,0 mm ou plus mince ;
un couvercle extérieur (240) sur le boîtier ;
un ruban adhésif (230) qui fixe le couvercle extérieur au boîtier ;
un couvercle d'accord (250) entre les résonateurs et le couvercle extérieur ; et
une pluralité de trous de nettoyage (250H) dans le couvercle d'accord.

2. Dispositif de filtre selon la revendication 1, dans lequel une surface inférieure du couvercle extérieur est fixée à une surface haute plate (210U) du boîtier par le ruban adhésif.

3. Dispositif de filtre selon la revendication 2, dans lequel le couvercle extérieur et la surface haute plate du boîtier sont chacun dépourvus de toute vis dans celui-ci.

4. Dispositif de filtre selon la revendication 2, dans lequel le ruban adhésif s'étend en une boucle continue sur la surface haute plate du boîtier.

5. Dispositif de filtre selon la revendication 1,
dans lequel le couvercle d'accord comprend une pluralité de trous aveugles (250BH) dans celui-ci, et
dans lequel une pluralité d'entretoises d'insertion par pression (260) sont dans les trous aveugles, respectivement.

6. Dispositif de filtre selon la revendication 5, comprenant en outre un circuit de décharge de gaz (274),
dans lequel une première des entretoises d'insertion par pression s'étend à travers une carte de circuit imprimé (270), PCB, qui comprend le circuit de décharge de gaz.

7. Dispositif de filtre selon la revendication 1, comprenant en outre une pluralité d'éléments d'accord (280, 290) sans débris dans le couvercle d'accord.

8. Dispositif de filtre selon la revendication 1, dans lequel le couvercle extérieur est une feuille métallique plate.

9. Dispositif de filtre selon la revendication 1,
dans lequel l'épaisseur moyenne de la paroi est de 1,5 mm ou plus mince,
dans lequel le dispositif de filtre a un peu moins de quatorze des résonateurs,
dans lequel le premier et le deuxième des résonateurs sont configurés pour fonctionner dans une bande de fréquences de réception et une bande de fréquences d'émission, respectivement, et
dans lequel un troisième des résonateurs est un résonateur à large bande (R-B) qui est configuré pour fonctionner à la fois dans la bande de fréquences de réception et dans la bande de fréquences d'émission.

10. Procédé de fabrication d'un dispositif de filtre radiofréquence RF, le procédé comprenant :
la pression d'une pluralité d'entretoises d'insertion par pression dans une pluralité de trous aveugles, respectivement, qui sont dans une surface haute d'un couvercle d'accord (310) ;
le soudage d'une surface basse du couvercle d'accord qui est opposée à la surface haute à un intérieur du dispositif de filtre RF (320) ;
le nettoyage, via une pluralité de trous de nettoyage qui s'étendent à travers le couvercle d'accord, de l'intérieur du dispositif de filtre RF après la réalisation du soudage (330) ; et
la fixation, par un ruban adhésif, d'une surface basse d'un couvercle extérieur à une surface haute d'un boîtier du dispositif de filtre RF après la réalisation du nettoyage (340).
